(19) Europäisches Patentamt
European Patent Office
Office européen des brevets

(11) **EP 3 117 857 A1**

(12) **EUROPEAN PATENT APPLICATION**

(43) Date of publication:
18.01.2017 Bulletin 2017/03

(51) Int Cl.:
*A61M 5/34* $^{(2006.01)}$      *B65D 83/00* $^{(2006.01)}$
*A61C 5/00* $^{(2017.01)}$      *B05C 17/005* $^{(2006.01)}$

(21) Application number: 16178454.1

(22) Date of filing: 07.07.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 14.07.2015 JP 2015140834

(71) Applicant: **Shofu Inc.**
**Kyoto 605-0983 (JP)**

(72) Inventors:
• **TAKEI, Ryouji**
**Soka-shi, Saitama (JP)**
• **YONEDA, Akira**
**Soka-shi,, Saitama (JP)**
• **SAKAMOTO, Shuji**
**Kyoto-shi,, Kyoto (JP)**
• **KADOBAYASHI, Yusei**
**Kyoto-shi,, Kyoto (JP)**

(74) Representative: **Addiss, John William et al**
**Mewburn Ellis LLP**
**City Tower**
**40 Basinghall Street**
**London EC2V 5DE (GB)**

(54) **SIMPLIFIED CARTRIDGE DESIGN PREVENTING NOZZLE FROM SLIPPING OFF**

(57) Provided herein are a cartridge in which a pipe can be retained without increasing the number of components or suppressing pushing-out of a content and a method of designing the cartridge. A length L over which the outer peripheral surface of a pipe 36 and the inner peripheral surface of a through hole 38 contact each other when the pipe 36 is press-fitted into the through hole 38, an average outside diameter R of the pipe 36 in the range of the length L over which the pipe 36 is press-fitted into the through hole 38, and an average inside diameter N of the through hole 38 in the range of the length L are determined to meet: $L \times R \times \pi \times (1 - N/R) \times 3.3 \geq W$ and $0.01 < (1 - N/R) < 0.1$, wherein the maximum pushing load of the piston 4 is defined as W and a grasping force to hold the pipe 36 as the pipe 36 is press-fitted into the through hole 38 is defined as 1 - N/R.

*Fig.7B*

EP 3 117 857 A1

**Description**

Technical Field

The present invention relates to a cartridge that includes a pipe as a nozzle, and to a method of designing the cartridge.

Background Art

JP 2002-536090 A shows in Figs. 1 and 6 an example cartridge according to the related art. The cartridge includes : a cartridge body 12 molded from a resin and including a cylindrical portion having two ends and an opening portion at one of the two ends and a nozzle body portion disposed at the other of the two ends of the cylindrical portion and provided with a metal pipe 20 as a nozzle; and a piston 22 made of a resin and disposed inside the cylindrical portion of the cartridge body 12 to push out a content 24 contained in the cylindrical portion from the nozzle 20. The nozzle body portion has a through hole formed therein to allow the pipe 20 to be press-fitted thereinto. In the cartridge, a stopper portion is provided in the nozzle body portion. An end portion 18 of the pipe 20 press-fitted into the through hole abuts against the stopper portion. This structure prevents the pipe 20 from being excessively pushed in or being pushed too far into the through hole.

JP 11-221234 A shows in Figs. 1 and 6 another example cartridge according to the related art. The cartridge includes: a cartridge body 10 molded from a resin and including a cylindrical portion 10 having two ends and an opening portion at one of the two ends and a nozzle body portion 38 disposed at the other of the two ends of the cylindrical portion 10 and provided with a metal pipe 18 as a nozzle; and a piston 14 made of a resin and disposed inside the cylindrical portion of the cartridge body 10 to push out a content contained in the cylindrical portion from the nozzle 18. A cap 16 is fitted onto the nozzle body portion 38 to apply a force to the nozzle body portion 38 from the radially outer side in order to retain the pipe 18.

Summary of Invention

Technical Problem

With the conventional cartridge described in JP 2002-536090 A, the pipe can be prevented from being excessively pushed in. However, the presence of the stopper becomes an obstruction when the content is pushed out, and suppresses pushing-out of the content. According to the related art, the pipe may be caused to slip out of the nozzle body portion by a force that pushes out the content through the pipe. In the conventional cartridge described in JP 11-221234 A, the cap is provided to retain the pipe. However, the presence of the cap results in complicated structure only to increase the number of components.

An object of the present invention is to provide a cartridge in which a pipe can be retained without increasing the number of components or suppressing pushing-out of a content and a method of designing the cartridge.

Solution to Problem

The present invention provides a cartridge including: a cartridge body molded from a resin and including a cylindrical portion having two ends and an opening portion at one of the two ends and a nozzle portion disposed at the other of the two ends of the cylindrical portion and provided with a metal pipe as a nozzle; and a piston made of a resin and disposed inside the cylindrical portion to push out a content contained in the cylindrical portion of the cartridge body through the pipe. The nozzle portion has a through hole formed therein to allow the pipe to be press-fitted thereinto. An end portion of the pipe on a side of the cylindrical portion does not project into an internal space of the cylindrical portion, and an entire end surface of the pipe opposes the internal space. That is, unlike the related art, the cartridge according to the present invention is not provided with a stopper that abuts against the pipe and therefore pushing-out of the content is not suppressed. In the present invention, a length L (mm) over which an outer peripheral surface of the pipe and an inner peripheral surface of the through hole contact each other when the pipe is press-fitted into the through hole, an average outside diameter R (mm) of the pipe in the range of the length L over which the pipe is press-fitted into the through hole, and an average inside diameter N (mm) of the through hole in the range of the length L are determined such that the following two expressions are met:

$$L \times R \times \pi \times (1 - N/R) \times 3.3 \geq W$$

and

$$0.01 < (1 - N/R) < 0.1$$

wherein a maximum pushing load of the piston (maximum load at the time when the content is pushed out) [adequate extraction strength W (kg · f) × 10] is defined as W (kg·f), and a grasping force to hold the pipe as the pipe is press-fitted into the through hole is defined as 1 - N/R.

The above conditions are found through experiments performed by the inventors. With the cartridge which meets the above conditions, the pipe is not caused to slip out of the through hole by a force that pushes out the content even if the end portion of the pipe on the side of the cylindrical portion does not project into the internal space of the cylindrical portion and the entire end surface of the pipe opposes the internal space.

Preferably, an entire surface of the end portion of the pipe is curved such that no angled portion is present. With this configuration, it is possible to prevent the inner wall of the through hole from being shaved by the pipe when inserting the pipe into the through hole, thereby furthermore preventing the swarf from being produced and pushed out as mixed in the content.

Preferably, an annular tapered surface is formed at an entrance portion of the through hole, and the tapered surface becomes larger in radial dimension toward an opening end surface of the entrance portion. Preferably, the tapered surface is formed not to contact the outer peripheral surface of the pipe when the pipe is press-fitted into the through hole. Such a tapered surface facilitates insertion of the pipe into the through hole.

Preferably, the through hole is shaped such that the radial dimension of the through hole which extends in a longitudinal direction of the nozzle portion continuously with the tapered surface becomes gradually smaller and thereafter constant. With this configuration, the pipe can be easily inserted to the middle of the nozzle portion and then the pipe is press-fitted. Therefore, this alleviates the workload of press-fitting the pipe.

Employing polypropylene resin enables the cartridge to be manufactured at a low cost.

In the method of designing a cartridge according to the present invention, it is only necessary to design the cartridge so as to meet the above conditions, which facilitates designing even if the size of the cartridge is varied.

Brief Description of Drawings

Figs. 1A to 1F are a front view, a bottom view, a plan view, a left side view, a right side view, and a perspective view, respectively, illustrating that an applicator is mounted with a cartridge.
Figs. 2A to 2D are a bottom view, a right side view, a left side view, and a perspective view, respectively, of a cylindrical syringe.
Figs. 3A to 3D are a front view, a left side view, a right side view, and a perspective view, respectively, of a plunger.
Fig. 4A is a vertical sectional view illustrating the applicator mounted with the cartridge when the plunger is withdrawn; and Fig. 4B is a vertical sectional view illustrating the applicator mounted with the cartridge when the plunger is pushed in.
Fig. 5A is an enlarged sectional view illustrating a main portion of the applicator mounted with the cartridge when the plunger is withdrawn; an upper part of Fig. 5B is an enlarged view illustrating the shape of a distributed projecting portion; and a lower part of Fig. 5B is a sectional view as taken along line C-C of the upper part of Fig. 5B.
Fig. 6 is an enlarged vertical sectional view illustrating a main portion of the applicator mounted with the cartridge when the plunger is pushed in.
Fig. 7A is a front view of the cartridge; and Fig. 7B is a vertical sectional view of the cartridge.
Fig. 8 is an enlarged vertical sectional view of a nozzle portion of the cartridge.
Figs. 9A and 9B are a vertical sectional view and a horizontal sectional view, respectively of the cartridge; and Fig. 9C is a sectional view illustrating a main portion of the applicator including a piston.
Figs. 10A to 10C illustrate how the cartridge is mounted to the applicator.
Fig. 11 illustrates the results of experiments.

Description of Embodiments

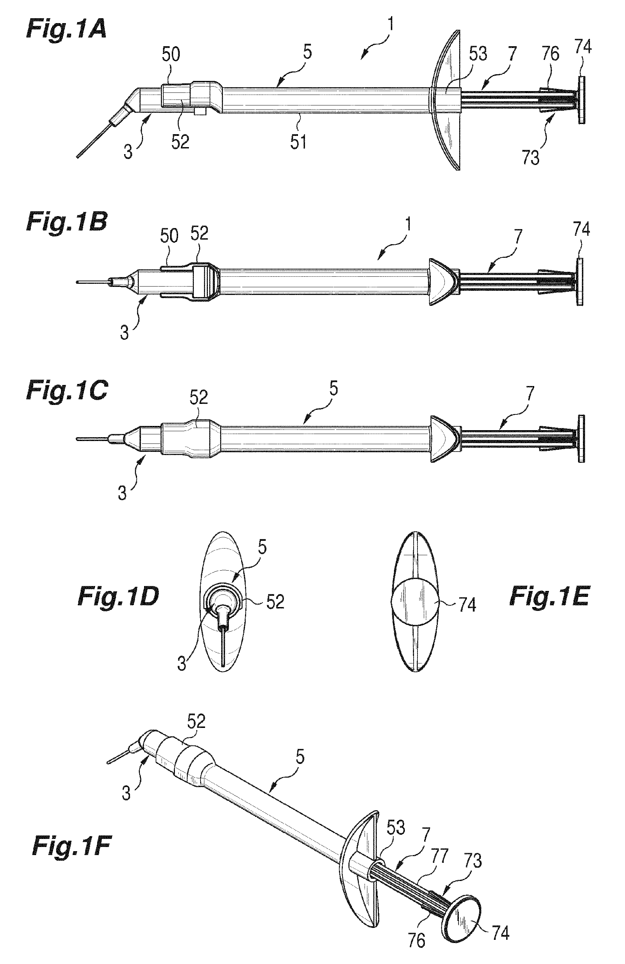

A cartridge according to an embodiment of the present invention will be described in detail below with reference to the accompanying drawings. In the following description, a cartridge according to an exemplary embodiment will be described in detail while describing a dental applicator for use to discharge a paste-type dental material from a cartridge. Figs. 1A to 1F are a front view, a bottom view, a plan view, a left side view, a right side view, and a perspective view, respectively, illustrating that a cartridge 3 is mounted to an applicator 1. The applicator 1 is constituted from a cylindrical syringe 5 and a plunger 7. In Fig. 1, the plunger 7 is located at a standby position as discussed later.

<Applicator>

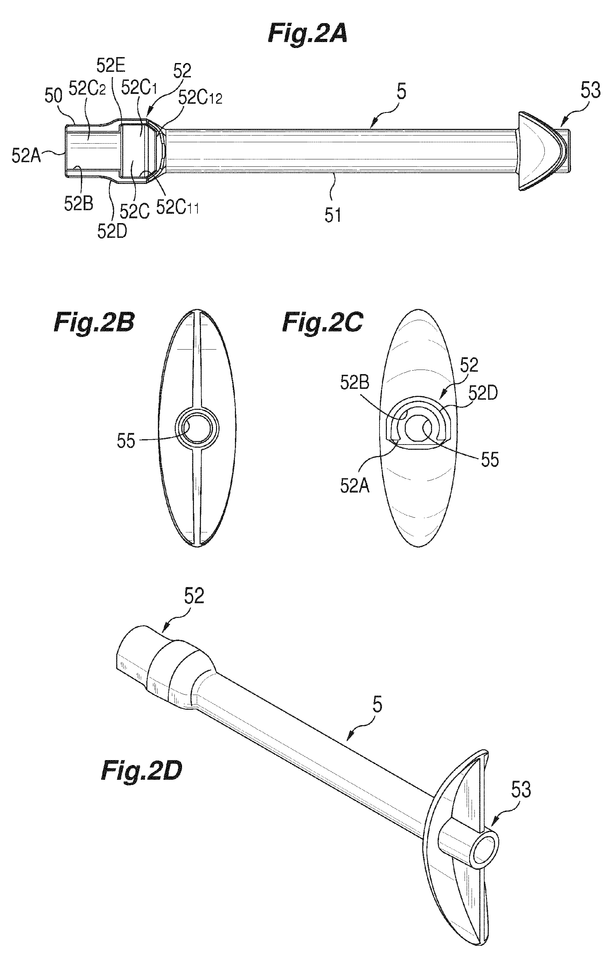

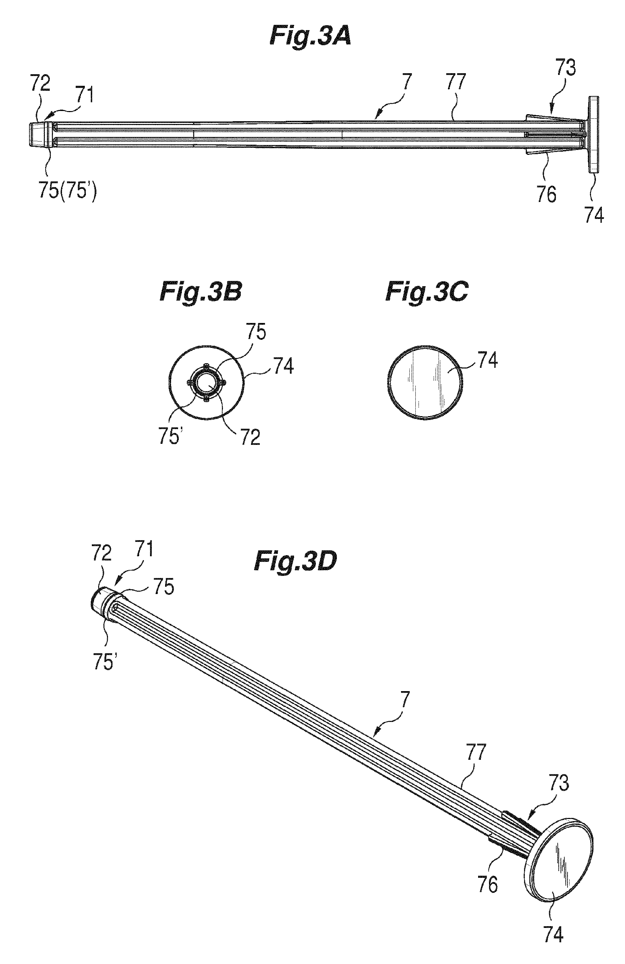

The applicator 1 includes the cylindrical syringe 5 and the plunger 7. As illustrated in Figs. 1A-1F and 2A-2D, the cylindrical syringe 5 is integrally molded from a resin material such as polypropylene or polyethylene, and has two ends. The cylindrical syringe 5 includes a cartridge fitting portion 52 provided at one 50 of the two ends of the cylindrical syringe 5 and configured to be fitted with the cartridge 3. As illustrated in Figs. 1A-1F and 3A-3D, the plunger 7 is integrally molded from a resin material such as polypropylene or polyethylene, and has two ends. The plunger 7 includes a pressing portion 72 provided at one 71 of the two ends of the plunger 7 and configured to be inserted into the cylindrical syringe 5 from the other 53 of the two ends of the cylindrical syringe 5 and to press a piston 4 inside the cartridge 3 fitted with the cartridge fitting portion 52, and an operated portion 74 provided at the other 73 of the two ends of the plunger 7, extending through the other end 53 of the cylindrical syringe 5, and configured to be pressed by a finger of an operator. The cylindrical syringe 5 and the plunger 7 are each molded integrally from a resin material, which makes it possible to significantly reduce the price of the applicator 1 compared to the conventional ones.

In the present embodiment, a stopper portion 76 that abuts on the other end 53 of the cylindrical syringe 5 is provided in the vicinity of the operated portion 74 of the plunger 7. Providing such stopper portion 76 in this way prevents the operator from pushing the plunger 7 too far into the cylindrical syringe 5 to break the plunger 7 or the cylindrical syringe 5 which is made of a resin material. The plunger 7 is shaped such that the outer peripheral surface of a portion 77 that is adjacent to the stopper portion 76 is proximate to the inner peripheral surface of the cylindrical syringe 5. With adoption of such structure, the plunger 7 can be stably moved along the cylindrical syringe 5 when the plunger 7 is pushed in. As a result, the plunger 7 is not swung when the plunger 7 is pushed in, thereby improving the operability of the applicator 1. In addition, the plunger 7 advantageously does not easily slip out of the cylindrical syringe 5.

<Resistance structure>

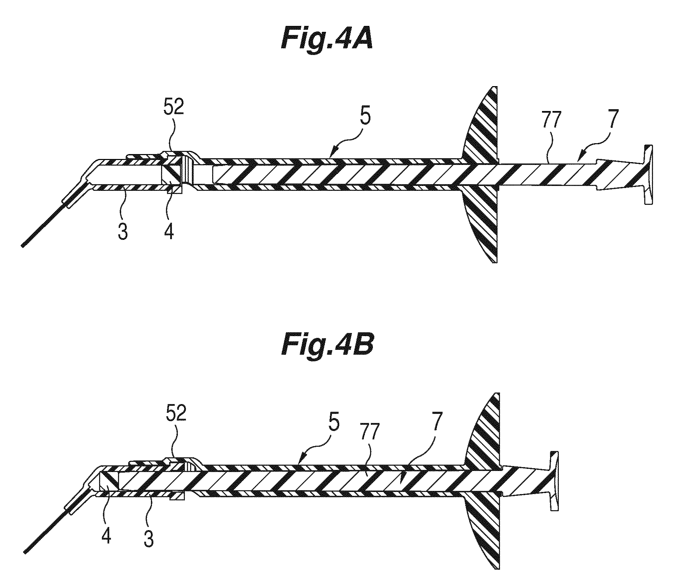

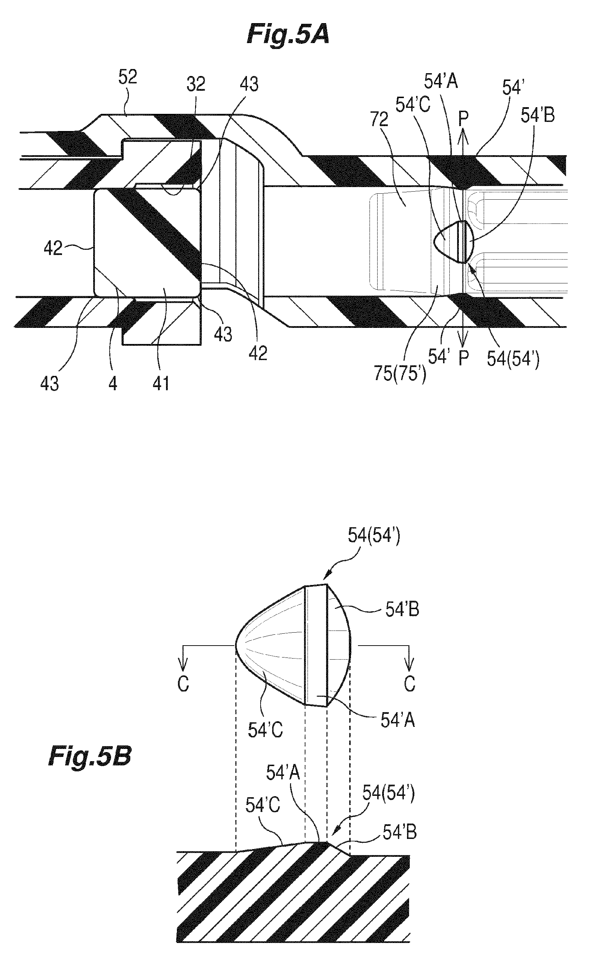

In the present embodiment, as illustrated in Figs. 4A-4B, 5A-5B, and 6, a resistance structure (54, 75) is provided between the inner peripheral surface of the cylindrical syringe 5 and the outer peripheral surface of the pressing portion 72 of the plunger 7. The resistance structure (54, 75) acts as resistance to movement of the pressing portion 72 when the pressing portion 72 is moved toward the cartridge fitting portion 52 beyond a predetermined position P shown in Fig. 5A and to movement of the pressing portion 72 when the pressing portion 72 is moved from the side of the cartridge fitting portion 52 toward the other end 53 of the cylindrical syringe 5 beyond the predetermined position P. The resistance structure (54, 75) is configured to allow the pressing portion 72 to be moved beyond the predetermined position P against the resistance when a force equal to or greater than a predetermined force is applied to the plunger 7 in the longitudinal direction of the plunger 7.

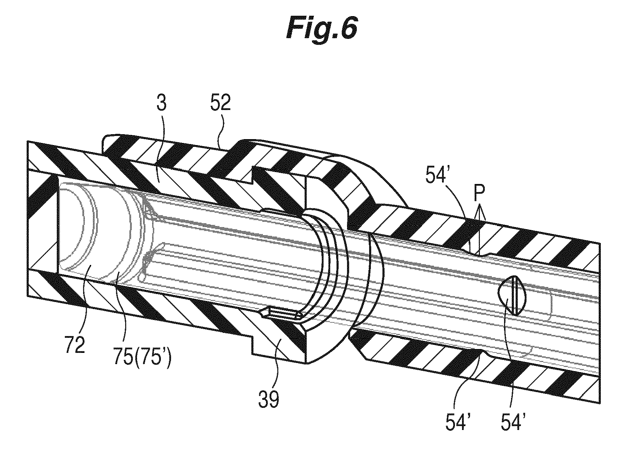

In the embodiment, as illustrated enlargedly in Figs. 5A and 6, the resistance structure (54, 75) includes at least one outer projecting portion 54 integrally formed with the inner peripheral surface of the cylindrical syringe 5 to project radially inward, and at least one inner projecting portion 75 integrally formed with the outer peripheral surface of the pressing portion 72 of the plunger 7 to project radially outward. The resin material for forming the cylindrical syringe 5 and the shape of the at least one outer projecting portion 54 and the resin material for forming the plunger 7 and the shape of the at least one inner projecting portion 75 are determined such that the at least one inner projecting portion 75 and the at least one outer projecting portion 54 are deformed to allow the at least one inner projecting portion 75 to pass over the at least one outer projecting portion 54 when a force equal to or greater than the predetermined force is applied to the plunger 7. The resin materials are preferably polypropylene. With this configuration, the inner projecting portion 75 and the outer projecting portion 54, which are constituents required for the resistance structure (54, 75), can be integrally formed with the cylindrical syringe 5 and the plunger 7, respectively, when the cylindrical syringe 5 and the plunger 7 are molded.

As illustrated in Figs. 3A-3D, 5A, and 6, the at least one inner projecting portion 75 provided on the plunger 7 is constituted from one annular projecting portion 75' that continuously annularly extends on the outer peripheral surface of the pressing portion 72 of the plunger 7, and the cross-sectional shape of the annular projecting portion 75' has a mountain-like profile of which the height gradually increases continuously toward the apex of the profile, as the annular projecting portion 75' is cut in a direction orthogonal to the circumferential direction of the plunger 7. The at least one outer projecting portion 54 is constituted from four distributed projecting portions 54' provided at predetermined angular intervals in the circumferential direction. The cross-sectional shape of each distributed projecting portion 54' has a profile of which the height gradually increases continuously toward the apex of the profile, as the distributed projecting portions 54' are cut in a direction orthogonal to the circumferential direction of the cylindrical syringe 5. The cross-sectional shape of each distributed projecting portion 54' has a profile of which the height gradually increases continuously toward the apex of the profile, as the distributed projecting portions 54' are cut in the circumferential direction of the cylindrical syringe 5. The predetermined angular intervals between the plurality of distributed projecting portions 54' may be determined as desired, but are preferably 60°, 90°, or 120°. With these angles, both high molding precision and high strength can be easily achieved even if the cylindrical syringe 5 and the plunger 7 are molded from a resin material.

As illustrated enlargedly in Fig. 5B, the profile of each distributed projecting portion 54' has a flat portion 54'A provided at the apex of the profile, and a skirt 54'C formed on the side of the cartridge fitting portion 52 [see Fig. 1A] with respect to the flat portion 54'A is longer than a skirt 54'B formed on the side of the other end 53 [see Fig. 1A] of the cylindrical syringe 5 with respect to the flat portion 54'A. If the distributed projecting portions 54' include the flat portion 54'A, the apexes of the distributed projecting portions 54' are more uniformly worn when either one of the annular projecting portion 75' and the four distributed projecting portions 54' passes over the other. This prevents the apexes of the distributed projecting portions 54' from being worn out early even if an action of either one of the annular projecting portion and the plurality of distributed projecting portions passing over the other or a converse action is repeatedly performed a certain number of times. As a result, the applicator 1 can be used a plurality of times even if the cylindrical syringe 5 and the plunger 7 are molded from a resin material. Providing the flat portion 54'A on each distributed projecting portion 54' can increase the processing precision of the distributed projecting portion 54'.

In contrast, the resistance structure according to the embodiment described above, the at least one outer projecting portion 54 may be constituted from one annular projecting portion that continuously annularly extends on the inner peripheral surface of the cylindrical syringe 5, and the cross-sectional shape of the annular projecting portion may have a mountain-like profile of which the height gradually increases continuously toward the apex of the profile, as the annular projecting portion is cut in a direction orthogonal to the circumferential direction of the cylindrical syringe 5. In this configuration, the at least one inner projecting portion 75 may be constituted from a plurality of distributed projecting portions provided at predetermined angular intervals in the circumferential direction of the plunger 7, and the cross-sectional shape of each distributed projecting portion may have a profile of which the height gradually increases continuously toward the apex of the profile, as the distributed projecting portions are cut in the direction orthogonal to the circumferential direction of the plunger 7 and the cross-sectional shape of each distributed projecting portion may have a profile of which the height gradually increases continuously toward the apex of the profile, as the distributed projecting portions are cut in the circumferential direction of the plunger 7.

In a configuration as in the present embodiment, wherein the resistance structure (54, 75) is constituted from the one annular projecting portion 75' and the plurality of distributed projecting portions 54', the annular projecting portion 75' and the plurality of distributed projecting portions 54' can be easily deformed when a force equal to or greater than a predetermined force is applied to the plunger 7 in the longitudinal direction of the plunger 7 as either one of the annular projecting portion 75' and the plurality of distributed projecting portions 54' passes over the other. In contrast, after either one of the annular projecting portion 75' and the plurality of distributed projecting portions 54' has passed over the other, either one of the annular projecting portion 75' and the plurality of distributed projecting portions 54' does not pass over the other in the opposite direction, even if the plunger 7 is rotated in the cylindrical syringe 5, unless a predetermined force is applied to the plunger 7 in the longitudinal direction of the plunger 7. Thus, the plunger 7 can be prevented from slipping off with a simple structure.

The position P of the resistance structure (54, 75) may be determined as desired. Preferably however, the resistance structure is provided adjacent to the cartridge fitting portion 52 of the cylindrical syringe 5 as in the present embodiment. If the resistance structure is located at the position P, it is possible to reduce the distance by which the plunger 7 is moved downward from the cylindrical syringe 5 when the operator holds the applicator 1 with the plunger 7 being directed downward, thereby improving the operability of the applicator 1. In practice, the resistance structure (54, 75) is preferably positioned such that the cartridge 3 can be fitted with the cartridge fitting portion 52 and the cartridge 3 can be removed from the cartridge fitting portion 52 when the at least one inner projecting portion 75 of the plunger 7 is in contact with the at least one outer projecting portion 54. With this configuration, the cartridge 3 can be mounted and removed without removing the plunger 7.

<Cartridge>

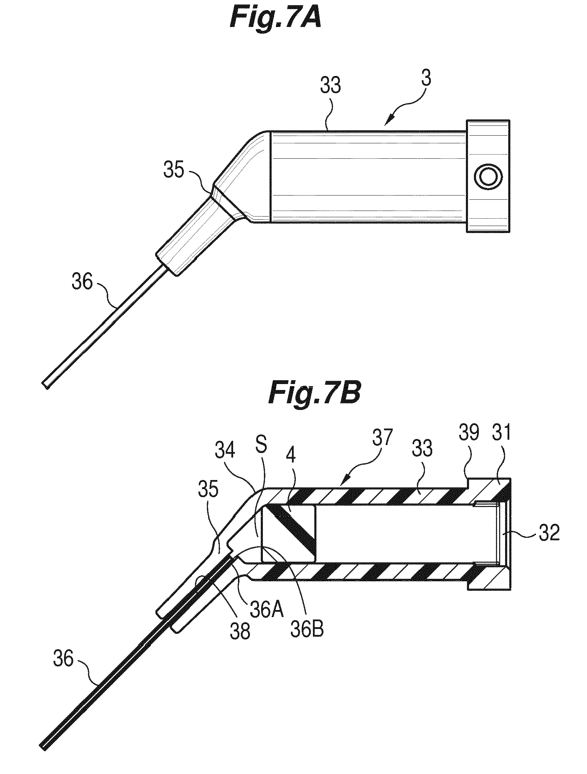

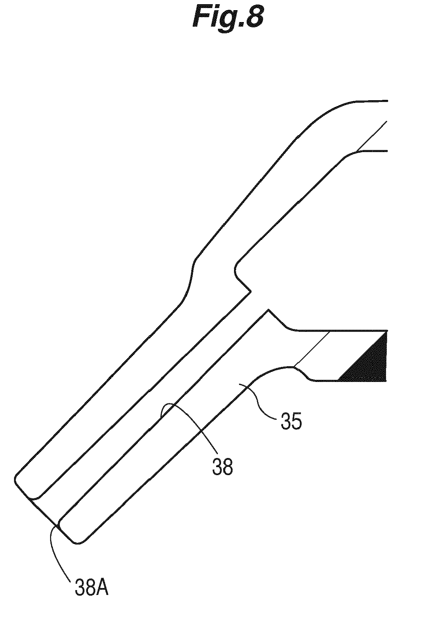

As illustrated in Figs. 7A and 7B, the cartridge 3 includes a cylindrical portion 33 having two ends and an opening portion 32 and a flange portion 39 formed at one 31 of the two ends of the cylindrical portion 33, a nozzle portion 35 provided at the other 34 of the two ends of the cylindrical portion 33, and the piston 4 disposed inside the cylindrical portion 33 to push out a content contained in the cylindrical portion 33 from the nozzle portion 35. The nozzle portion 35 includes, as a nozzle, a pipe 36 made of metal and provided at the other end 34 of the cylindrical portion 33. The cylindrical portion 33 and the nozzle portion 35 are integrally molded from a resin material such as polypropylene. In the cartridge 3, unlined the prior art, a stopper is not provided to abut on the pipe 36. Accordingly, pushing-out of the content is not restricted. Preferably, an entire surface of the end portion 36A of the pipe 36 is curved such that no angled portion is present. With this configuration, it is possible to prevent the inner wall of a through hole 38 from being shaved by the pipe 36 when inserting the pipe 36 into the through hole 38, thereby furthermore preventing the swarf from being produced and pushed out as mixed in the content. As illustrated in Fig. 8, an annular tapered surface 38A is formed at an entrance portion of the through hole 38, and the tapered surface 38A becomes larger in radial dimension toward an opening end surface of the entrance portion. The tapered surface 38A is formed not to contact the outer peripheral surface of the pipe 36 when the pipe 36 is press-fitted into the through hole 38. Such a tapered surface 38A facilitates insertion of the pipe 36 into the through hole 38.

The through hole 38 is shaped such that the radial dimension of the through hole 38, which extends in the longitudinal direction of the nozzle portion 35 continuously with the tapered surface 38A, becomes gradually smaller and thereafter constant. With this configuration, the pipe 36 can be easily inserted to the middle of the through hole 38, after which the pipe 36 is press-fitted, thereby alleviating the workload of press-fitting.

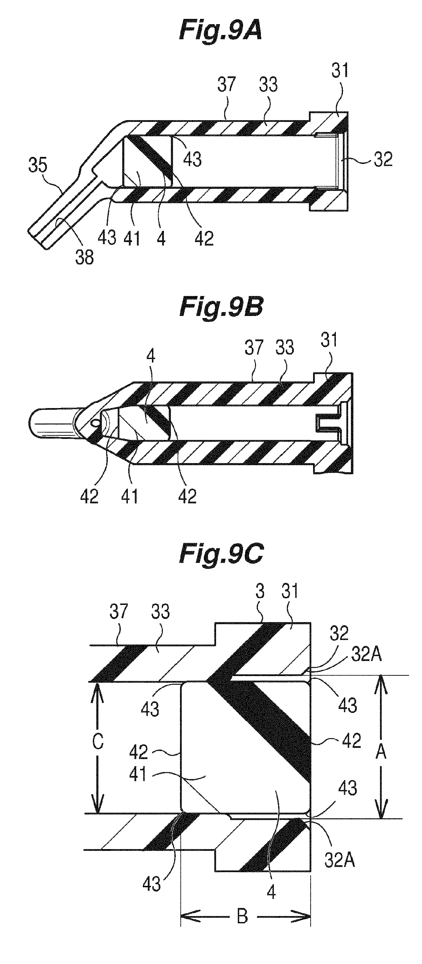

The piston 4 is integrally molded from a resin material such as polypropylene. As illustrated in Figs. 9A to 9C, a pair of piston-side tapered surfaces 43 or piston-side curved surfaces 43 are formed between an annular peripheral wall surface 41 of the piston 4 and a pair of circular end surfaces 42, 42 of the piston 4 located on both sides in the thickness direction of the piston 4. The pair of piston-side tapered surfaces 43 or piston-side curved surfaces 43 become smaller in radial dimension from the annular peripheral wall surface 41 toward the pair of circular end surfaces 42, 42. Preferably, the radial dimension of the piston 4 is slightly larger than the thickness dimension thereof. In Figs. 9A and 9B, one of the end portions of the piston 4 has been deformed to conform to the shape of the inner wall surface of the cylindrical portion 33 of a cartridge body 37.

As illustrated in Fig. 9C, a body-side tapered surface 32A or a body-side curved surface 32A is formed at the opening portion 32 at the one end of the cylindrical portion 33 of the cartridge body 37, and the body-side tapered surface 32A or the body-side curved surface 32A becomes smaller in radial dimension toward the other end of the cylindrical portion 33. The inner angle of the body-side tapered surface 32A or the radius of curvature of the body-side curved surface 32A is larger than the inner angle of the pair of piston-side tapered surfaces 43 or the radius of curvature of the pair of piston-side curved surfaces 43 formed on the piston 4. This configuration further facilitates insertion of the piston 4 from the opening portion 32 of the cylindrical portion 33.

\<Structure of cartridge fitting portion>

As illustrated in Figs. 2A and 2B, the cartridge fitting portion 52 configured to be fitted with the cartridge 3 includes an end surface opening portion 52A opened in an extending direction in which a cylindrical body 51 of the cylindrical syringe 5 extends, a continuous opening portion 52B continuous with the end surface opening portion 52A, opened in a radial direction, and extending in the extending direction, and a recess portion 52C configured to communicate with the continuous opening portion 52B and an internal passage 55 in the cylindrical body 51. The recess portion 52C includes a flange fitting recess 52C1 to be fitted with the flange portion 39 of the cartridge 3, and a cylindrical portion fitting recess 52C2 configured to communicate with the flange fitting recess 52C1 and to be fitted with a part of the cylindrical portion 33. A wall portion 52D surrounding the cylindrical portion fitting recess 52C2 of the cartridge fitting portion 52 is configured to warp into snap engagement with the part of the cylindrical portion 33 when the part of the cylindrical portion 33 is inserted from the continuous opening portion 52B. Specifically, a sectional shape of an inner wall surface of the wall portion 52D surrounding the cylindrical portion fitting recess 52C2 has an arcuate profile that is continuous with the continuous opening portion 52B, as the wall portion 52D is cut in a direction orthogonal to a longitudinal direction of the cylindrical syringe 5, and the arcuate profile has an arcuate angle larger than 180 degrees. With such a structure, a sufficient force for holding the cylindrical portion 33, which is required for snap engagement, can be secured. The term "snap engagement" refers to engagement obtained when the wall portion 52D surrounding the cylindrical portion fitting recess 52C2 holds the cylindrical portion 33 utilizing a force generated in the wall portion 52D which has been deformed to be opened and then is going to return to its original state. The flange fitting recess 52C1 includes a first portion 52C11 to be fitted with the flange portion 39, and a second portion 52C12 located between the flange portion 39 and the cylindrical body 51 when the first portion 52C11 is fitted with the flange portion 39. In the present embodiment, the second portion 52C12 is shaped to become gradually smaller in radial dimension as the second portion 52C12 extends toward the cylindrical body 51. The wording "(to be) shaped to become gradually smaller in radial dimension" may mean in other words that the inner wall surface of a wall portion surrounding the second portion 52C12 of the flange fitting recess 52C1 constitutes a part of a conical surface having its apex located on the side of the cylindrical body 51.

A stepped portion 52E to be engaged with the flange portion 39 is formed between the flange fitting recess 52C1 and the cylindrical portion fitting recess 52C2. The stepped portion 52E is configured to entirely contact the end surface of the flange portion 39 located on the side of the cylindrical portion 33. With adoption of this structure, the flange portion 39 is pressed against the stepped portion 52E when the piston 4 is pushed by the plunger 7, thereby preventing the cartridge 3 from popping out of the cartridge fitting portion 52.

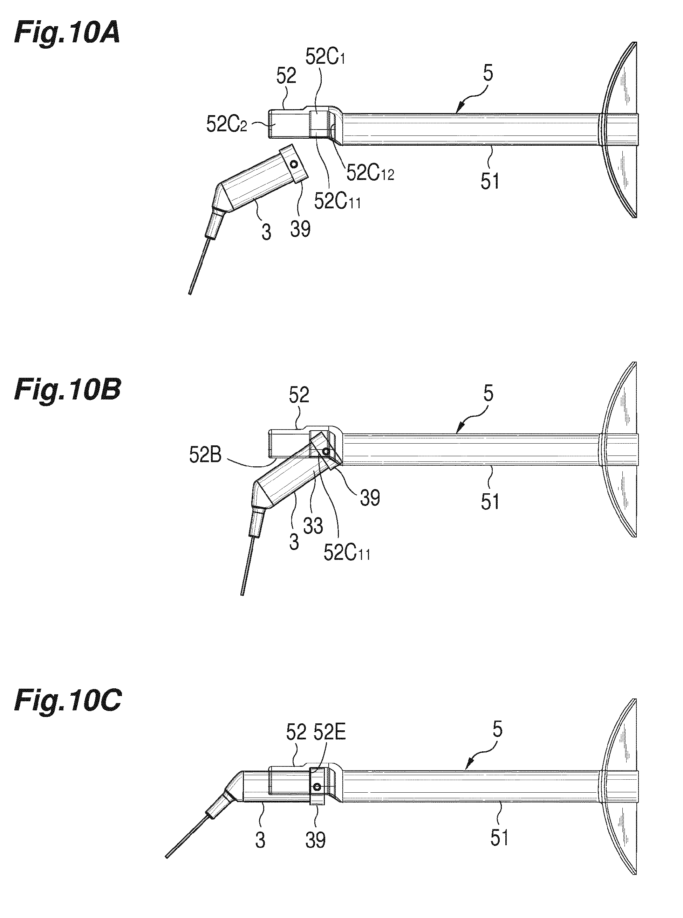

When mounting the cartridge 3, as illustrated in Figs. 10A and 10B, the cylindrical portion 33 is pushed into the cylindrical portion fitting recess 52C2 through the continuous opening portion 52B while inserting the flange portion 39 of the cartridge 3 into the first portion 52C11 of the flange fitting recess 52C1 in order to achieve snap engagement. When removing the cartridge 3, the cylindrical portion 33 is extracted from the cylindrical portion fitting recess 52C2 by causing the distal end side of the cylindrical portion 33 to get out from the continuous opening portion 52B while lifting up the cylindrical portion 33 using the flange portion 39 as the fulcrum, and thereafter the flange portion 39 is extracted from the flange fitting recess 52C1. During this operation, the flange portion 39 can be tilted while sliding on the inner wall surface of a wall portion surrounding the second portion 52C12 of the flange fitting recess 52C1 since the second portion 52C12 is shaped to become gradually smaller in radial dimension as the second portion 52C12 extends toward the cylindrical body 51. As a result, the cartridge 3 can be easily removed using the flange portion 39 as the fulcrum. The cartridge fitting portion 52 of such structure can easily be integrally formed with the cylindrical syringe 5. As a result, it is possible to provide an applicator made of a resin material with ease and at a low price.

\<Design of Cartridge>

In the present embodiment, a length L (mm) over which the outer peripheral surface of the pipe 36 and the inner peripheral surface of the through hole 38 contact each other when the pipe 36 is press-fitted into the through hole 38, an average outside diameter R (mm) of the pipe 36 in the range of the length L over which the pipe 36 is press-fitted into the through hole 38, and an average inside diameter N (mm) of the through hole 38 in the range of the length L are determined such that the following two expressions are met:

$$L \times R \times \pi \times (1 - N/R) \times 3.3 \geq W$$

and

$$0.01 < (1 - N/R) < 0.1$$

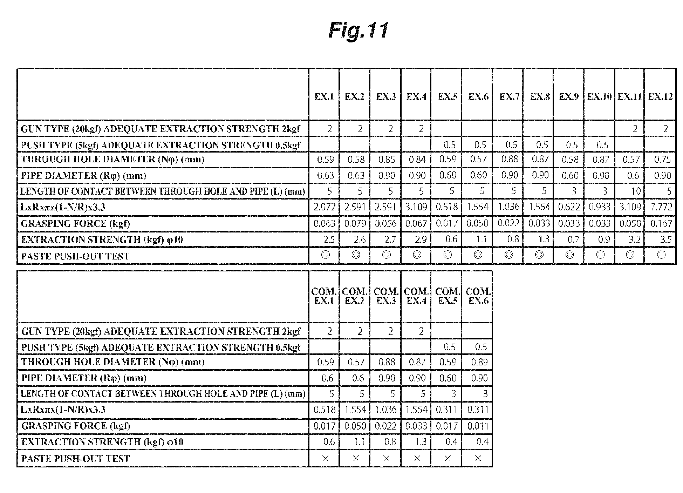

wherein a maximum pushing load of the piston 4 (maximum load at the time when the content is pushed out) [adequate extraction strength W (kg · f ) × 10 is defined as W (kg · f) and a grasping force to hold the pipe 36 as the pipe is press-fitted into the through hole 38 is defined as 1 - N/R. L×R×$\pi$ indicates an area of contact between the pipe 36 and the through hole 38. The coefficient 3.3 is determined from the results of experiments shown in Fig. 11.

If the paste-type dental material is a filling material (content) and the cartridge is molded from polypropylene, it is only necessary to determine N, R, and L such that 3 mm $\leq$ L $\leq$ 10 mm and 0.6 mm $\leq$ R $\leq$ 0.9 mm are met. W may be determined as follows. If the maximum pushing load is 20 kg · f when the content is pushed out using an applicator of a gun type such as that described in JP 06-40886 A, the adequate extraction strength which is considered to be one-tenth of the maximum pushing load is 2 kg · f. Therefore, the pipe does not slip off if the adequate extraction strength W is 2 kg · f or more, and thus W is 2 kg · f or more. If the maximum pushing load is 5 kg · f when the content is pushed out using the applicator 1 according to the present embodiment, the adequate extraction strength W which is considered to be one-tenth of the maximum pushing load is 0.5 kg · f . Therefore, the pipe does not slip off if the adequate extraction strength W is 0.5 kg · f or more, and thus W is 0.5 kg · f or more. Thus, the value of W is determined based on the maximum pushing load of the applicator.

The extraction strength is not known before a die is actually fabricated and a pipe is mounted and extracted. The extraction strength can be estimated when the above relational expressions are met. That is, conditions under which the pipe is not extracted can be determined by designing that meets the above relational expressions.

In the experiments, the results of which are shown in Fig. 11, it was verified whether or not the pipe was extracted using an applicator of a gun type which uses the principle of leverage and an applicator of a finger push type according to the present embodiment. In the "paste push-out test" of the experiment results, the double circle mark indicates that the pipe was not extracted, and the cross mark indicates that the pipe was extracted. It was confirmed from the experiment results that, with the cartridge 3 which meets the two expressions above, the pipe 36 was not caused to slip out of the through hole 38 by a force that pushed out the content even if the end portion 36A of the pipe 36 on the side of the cylindrical portion 33 did not project into the internal space S of the cylindrical portion 33 and the entire end surface 36B of the pipe 36 opposed the internal space S.

While the preferred embodiments of the present invention have been described and shown herein, the present invention should not be construed in a limiting sense. It should be understood that various modifications, rearrangements, and substitutions may be made without departing from the scope of the present invention.

Industrial Applicability

According to the present invention, a cartridge may be provided, which prevents slip-off of a pipe from the cartridge without increasing the number of components and suppressing pushing-out of the content, and a method of designing such cartridge may be provided.

**Claims**

1.  A cartridge comprising:

    a cartridge body (37) molded from a resin and including a cylindrical portion (33) having two ends and an opening portion (32) at one (31) of the two ends and a nozzle portion (35) disposed at the other (34) of the two ends of the cylindrical portion (33) and provided with a metal pipe (36) as a nozzle, the nozzle portion (35) having a through hole (38) formed therein to allow the pipe (36) to be press-fitted thereinto; and
    a piston (4) made of a resin and disposed inside the cylindrical portion (33) to push out a content contained in the cylindrical portion (33) of the cartridge body (37) through the pipe (36), **characterized in that**:

    an end portion (36A) of the pipe (36) on a side of the cylindrical portion (33) does not project into an internal space (S) of the cylindrical portion (33), and an entire end surface (36A) of the pipe (36) opposes the internal space (S); and
    a length L (mm) over which an outer peripheral surface of the pipe (36) and an inner peripheral surface of the through hole (38) contact each other when the pipe (36) is press-fitted into the through hole (38), an average outside diameter R (mm) of the pipe (36) in the range of the length L over which the pipe (36) is press-fitted into the through hole (38), and an average inside diameter N (mm) of the through hole (38) in the range of the length L are determined such that the following two expressions are

met:

$$L×R×π×(1 - N/R)×3.3 \geq W$$

and

$$0.01 < (1 - N/R) < 0.1$$

wherein a maximum pushing load of the piston (4) is defined as W (kg · f) and a grasping force to hold the pipe (36) as the pipe (36) is press-fitted into the through hole (38) is defined as 1 - N/R.

2. The cartridge according to claim 2, wherein

    a surface of the entire end portion (36A) of the pipe (36) is curved such that an angled portion is not present.

3. The cartridge according to claim 2, wherein:

    an annular tapered surface (38A) is formed at an entrance portion of the through hole (38), the tapered surface (38A) becoming larger in radial dimension toward an opening end surface of the entrance portion; and
    the tapered surface (38A) is formed not to contact the outer peripheral surface of the pipe (36) when the pipe (36) is press-fitted into the through hole (38).

4. The cartridge according to claim 3, wherein

    the through hole (38) is shaped such that the radial dimension of the through hole (38) which extends in a longitudinal direction of the nozzle portion (35) continuously with the tapered surface (38A) becomes gradually smaller and thereafter constant.

5. The cartridge according to claim 1, wherein

    the resin material for forming the cartridge body (37) and the resin material for forming the piston (4) are polypropylene.

6. A method of designing a cartridge,

    the cartridge including a cartridge body (37) molded from a resin and including a cylindrical portion (33) having two ends and an opening portion (32) at one (31) of the two ends and a nozzle portion (35) disposed at the other (34) of the two ends of the cylindrical portion (33) and provided with a metal pipe (36) as a nozzle, the nozzle portion (35) having a through hole (38) formed therein to allow the pipe (36) to be press-fitted thereinto; and a piston (4) made of a resin and disposed inside the cylindrical portion (33) to push out a content contained in the cylindrical portion (33) of the cartridge body (37) through the pipe (36), wherein an end portion (36A) of the pipe (36) on a side of the cylindrical portion (33) does not project into an internal space (S) of the cylindrical portion (33) and the entire end surface (36A) of the pipe (36) opposes the internal space (S), **characterized in that**:
the method comprises:

    defining as W (kg · f) a maximum pushing load of the piston (4) ;
    defining as L (mm) a length over which an outer peripheral surface of the pipe (36) and an inner peripheral surface of the through hole (38) contact each other when the pipe (36) is press-fitted into the through hole (38);
    defining as R (mm) an average outside diameter of the pipe (36) in the range of the length L over which the pipe (36) is press-fitted into the through hole (38);
    defining as N (mm) an average inside diameter of the through hole (38) in the range of the length L of the through hole (38);
    defining as 1 - N/R a grasping force to hold the pipe (36) as the pipe (36) is press-fitted into the through hole (38); and
    determining the average outside diameter R of the pipe (36), the average inside diameter N of the through hole (38), and the length L such that the following two expressions are met:

$$L×R×π×(1 - N/R)×3.3×W$$

and

$$0.01 < (1 - N/R) < 0.1.$$

**Fig.1A**

**Fig.1B**

**Fig.1C**

**Fig.1D**

**Fig.1E**

**Fig.1F**

# Fig.2A

# Fig.2B

# Fig.2C

# Fig.2D

**Fig.3A**

**Fig.3B**

**Fig.3C**

**Fig.3D**

**Fig.4A**

**Fig.4B**

## *Fig.5A*

## *Fig.5B*

# Fig.6

# Fig.7A

# Fig.7B

# Fig.8

35

38

38A

*Fig.9A*

*Fig.9B*

*Fig.9C*

**Fig.10A**

**Fig.10B**

**Fig.10C**

## Fig.11

| | EX.1 | EX.2 | EX.3 | EX.4 | EX.5 | EX.6 | EX.7 | EX.8 | EX.9 | EX.10 | EX.11 | EX.12 |
|---|---|---|---|---|---|---|---|---|---|---|---|---|
| GUN TYPE (20kgf) ADEQUATE EXTRACTION STRENGTH 2kgf | 2 | 2 | 2 | 2 | | | | | | | 2 | 2 |
| PUSH TYPE (5kgf) ADEQUATE EXTRACTION STRENGTH 0.5kgf | | | | | 0.5 | 0.5 | 0.5 | 0.5 | 0.5 | 0.5 | | |
| THROUGH HOLE DIAMETER (Nφ) (mm) | 0.59 | 0.58 | 0.85 | 0.84 | 0.59 | 0.57 | 0.88 | 0.87 | 0.58 | 0.87 | 0.57 | 0.75 |
| PIPE DIAMETER (Rφ) (mm) | 0.63 | 0.63 | 0.90 | 0.90 | 0.60 | 0.60 | 0.90 | 0.90 | 0.60 | 0.90 | 0.6 | 0.90 |
| LENGTH OF CONTACT BETWEEN THROUGH HOLE AND PIPE (L) (mm) | 5 | 5 | 5 | 5 | 5 | 5 | 5 | 5 | 3 | 3 | 10 | 5 |
| LxRxπx(1-N/R)x3.3 | 2.072 | 2.591 | 2.591 | 3.109 | 0.518 | 1.554 | 1.036 | 1.554 | 0.622 | 0.933 | 3.109 | 7.772 |
| GRASPING FORCE (kgf) | 0.063 | 0.079 | 0.056 | 0.067 | 0.017 | 0.050 | 0.022 | 0.033 | 0.033 | 0.033 | 0.050 | 0.167 |
| EXTRACTION STRENGTH (kgf) φ10 | 2.5 | 2.6 | 2.7 | 2.9 | 0.6 | 1.1 | 0.8 | 1.3 | 0.7 | 0.9 | 3.2 | 3.5 |
| PASTE PUSH-OUT TEST | ◎ | ◎ | ◎ | ◎ | ◎ | ◎ | ◎ | ◎ | ◎ | ◎ | ◎ | ◎ |

| | COM. EX.1 | COM. EX.2 | COM. EX.3 | COM. EX.4 | COM. EX.5 | COM. EX.6 |
|---|---|---|---|---|---|---|
| GUN TYPE (20kgf) ADEQUATE EXTRACTION STRENGTH 2kgf | 2 | 2 | 2 | 2 | | |
| PUSH TYPE (5kgf) ADEQUATE EXTRACTION STRENGTH 0.5kgf | | | | | 0.5 | 0.5 |
| THROUGH HOLE DIAMETER (Nφ) (mm) | 0.59 | 0.57 | 0.88 | 0.87 | 0.59 | 0.89 |
| PIPE DIAMETER (Rφ) (mm) | 0.6 | 0.6 | 0.90 | 0.90 | 0.60 | 0.90 |
| LENGTH OF CONTACT BETWEEN THROUGH HOLE AND PIPE (L) (mm) | 5 | 5 | 5 | 5 | 3 | 3 |
| LxRxπx(1-N/R)x3.3 | 0.518 | 1.554 | 1.036 | 1.554 | 0.311 | 0.311 |
| GRASPING FORCE (kgf) | 0.017 | 0.050 | 0.022 | 0.033 | 0.017 | 0.011 |
| EXTRACTION STRENGTH (kgf) φ10 | 0.6 | 1.1 | 0.8 | 1.3 | 0.4 | 0.4 |
| PASTE PUSH-OUT TEST | × | × | × | × | × | × |

Europäisches
Patentamt

European
Patent Office

Office européen
des brevets

# EUROPEAN SEARCH REPORT

**Application Number**

EP 16 17 8454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 871 355 A (DRAGAN WILLIAM B [US] ET AL) 16 February 1999 (1999-02-16) * column 3, line 50 - column 4, line 65 * * figures 1-6 * | 1-6 | INV. A61M5/34 B65D83/00 A61C5/00 B05C17/005 |
| A | WO 2015/077675 A2 (3M INNOVATIVE PROPERTIES CO [US]) 28 May 2015 (2015-05-28) * pages 5-15 * * figures 1-13 * | 1-6 | |
| A | US 5 052 927 A (DISCKO JR JOHN [US]) 1 October 1991 (1991-10-01) * column 3, line 11 - column 6, line 15 * * figures 1-7 * | 1-6 | |
| A | US 5 324 273 A (DISCKO JR JOHN J [US]) 28 June 1994 (1994-06-28) * column 2, line 21 - column 3, line 52 * * figures 1-5 * | 1-6 | |
| A | WO 2011/063125 A1 (POND GARY J [US]) 26 May 2011 (2011-05-26) * page 5, line 28 - page 10, line 1 * * figures 1-10 * | 1-6 | TECHNICAL FIELDS SEARCHED (IPC) A61C A61M B65D B05C |
| A | US 3 595 439 A (NEWBY GLENN A ET AL) 27 July 1971 (1971-07-27) * column 2, line 36 - column 5, line 18 * * figures 1-11 * | 1-6 | |
| A | KR 100 762 889 B1 (LEE KWANG SUK [KR]) 4 October 2007 (2007-10-04) * abstract * | 1-6 | |

The present search report has been drawn up for all claims

| Place of search | Date of completion of the search | Examiner |
|---|---|---|
| Munich | 23 November 2016 | Pisseloup, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 8454

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2016

| Patent document cited in search report | | Publication date | Patent family member(s) | | Publication date |
|---|---|---|---|---|---|
| US 5871355 | A | 16-02-1999 | NONE | | |
| WO 2015077675 | A2 | 28-05-2015 | EP<br>US<br>WO | 3073953 A2<br>2016296962 A1<br>2015077675 A2 | 05-10-2016<br>13-10-2016<br>28-05-2015 |
| US 5052927 | A | 01-10-1991 | US<br>US | 5052927 A<br>5336088 A | 01-10-1991<br>09-08-1994 |
| US 5324273 | A | 28-06-1994 | NONE | | |
| WO 2011063125 | A1 | 26-05-2011 | US<br>US<br>WO | 2011117518 A1<br>2015050615 A1<br>2011063125 A1 | 19-05-2011<br>19-02-2015<br>26-05-2011 |
| US 3595439 | A | 27-07-1971 | BE<br>CH<br>DE<br>ES<br>FR<br>GB<br>JP<br>NL<br>SE<br>US<br>ZA | 755870 A1<br>522399 A<br>2045509 A1<br>383266 A1<br>2061099 A5<br>1313339 A<br>S505510 B1<br>7012768 A<br>348100 B<br>3595439 A<br>7006091 B | 08-03-1971<br>30-06-1972<br>01-04-1971<br>01-01-1973<br>18-06-1971<br>11-04-1973<br>04-03-1975<br>11-03-1971<br>28-08-1972<br>27-07-1971<br>27-05-1971 |
| KR 100762889 | B1 | 04-10-2007 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2002536090 A
- JP 11221234 A
- JP 6040886 A